Europäisches Patentamt

European Patent Office

Office européen des brevets

(11) Veröffentlichungsnummer: **0 304 928**
**A1**

## EUROPÄISCHE PATENTANMELDUNG

(21) Anmeldenummer: 88113943.0

(22) Anmeldetag: 26.08.88

(51) Int. Cl.⁴: **B30B  15/00**

(30) Priorität: 28.08.87 US 90649

(43) Veröffentlichungstag der Anmeldung:
01.03.89 Patentblatt  89/09

(84) Benannte Vertragsstaaten:
DE FR GB IT SE

(71) Anmelder: **DEERE & COMPANY**
**1 John Deere Road**
**Moline Illinois 61265(US)**

(72) Erfinder: **Fleischer, Dennis Gerald**
**N7647 Highway TW**
**Horicon Wisconsin 53032(US)**
Erfinder: **Smola, Robert Joseph**
**700 Hidde Drive**
**Watertown Wisconsin 53094(US)**
Erfinder: **Draeger, James Herman**
**1205 Grove Street**
**Beaver Dam Wisconsin 53916(US)**

(74) Vertreter: **Feldmann, Bernhard et al**
**DEERE & COMPANY European Office, Patent**
**Department Steubenstrasse 36-42 Postfach**
**503**
**D-6800 Mannheim 1(DE)**

(54) **Einrichtsystem, insbesondere für eine Werkzeugmaschine.**

(57) Ein Einrichtsystem (10), insbesondere für eine Werkzeugmaschine, ist mit einer Platte (18) versehen, in der mehrere Fördereinheiten (30, 34) mit versenkbaren Förderelementen (40) angeordnet sind. Auf den Förderelementen (40) vorgesehene Rollen (42) sind zur Förderung in unterschiedliche Förderrichtungen ausgerichtet. Auf diese Weise können wahlweise die Förderelemente (40) für die eine oder die andere Förderrichtung betätigt und das Werkzeug gegen ein anderes und bereits auf einem angrenzenden Zuführtisch vorgerichtetes Werkzeug ausgetauscht werden.

Fig. 3

## Einrichtsystem, insbesondere für eine Werkzeugmaschine

Die Erfindung betrifft ein Einrichtsystem, insbesondere für eine Werkzeugmaschine, mit einer Platte, in/auf der mindestens zwei Fördereinheiten mit versenkbaren Förderelementen angeordnet sind.

Einrichtsysteme dienen dazu, bei einer Werkzeugmaschine oder einer sonstigen Vorrichtung für deren Betrieb erforderliche Werkzeuge oder sonstige Vorrichtungen bereitzustellen.

So ist aus der US-A-4,498,384 ein Einrichtsystem bekannt geworden, das zwei zueinander parallel und zu einer Vorderkante rechtwinklig verlaufende Förderelemente aufweist. Diese Förderelemente enthalten Rollen, die anheb- und absenkbar sind, so daß im angehobenen Zustand ein Werkzeug auf ihnen zu einer bestimmten Stelle auf der Einrichtplatte der Werkzeugmaschine bewegt und dort für die weitere Arbeit abgesenkt werden kann.

Dieses Einrichtsystem ist insoweit nachteilig, als zur Bestückung der Werkzeugmaschine mit einem Werkzeug letzteres mit einer getrennten Vorrichtung herangebracht und aufgesetzt werden muß.

Die der Erfindung zugrunde liegende Aufgabe wird darin gesehen, das bekannte Einrichtsystem derart zu verbessern, daß eine zeitsparende und somit einen flexiblen Einsatz der Werkzeugmaschine zulassende Zuführung eines Werkzeugs möglich wird.

Diese Aufgabe ist erfindungsgemäß durch die Merkmale des Patentanspruchs 1 gelöst worden, wobei in den weiteren Patentansprüchen Merkmale aufgeführt sind, die die Lösung in vorteilhafter Weise weiterentwickeln.

Auf diese Weise ist ein Vorrichten des Werkzeugs seitlich der Werkzeugmaschine möglich, so daß die Bedienungsperson in ihrer Tätigkeit nicht gestört wird, und bei Bedarf kann dieses Werkzeug auf die Platte der Werkzeugmaschine geschoben werden, wobei durch das Vorsehen von in zwei Richtungen wirkenden Fördereinheiten das bisherige Werkzeug an dem nunmehr zu verwendenden Werkzeug vorbeibewegt werden kann.

Wenn für jede Förderrichtung mindestens zwei Fördereinheiten vorgesehen sind, brauchen, um ein Umkippen des Werkzeugs zu vermeiden, in den jeweiligen Fördereinheiten vorgesehene Förderelemente nicht besonders breit ausgebildet zu sein, sondern der notwendige Stützabstand kann durch den Abstand der Fördereinheiten voneinander geschaffen werden.

Verlaufen die Fördereinheiten und fördern somit deren Förderelemente unter einem Winkel von 90° zueinander, kann das Werkzeug auf kürzestem Weg von der bisherigen Stelle weg-, an dem neuen Werkzeug vorbei- und zu einer endgültigen Ablagestelle bewegt werden.

Ein oder mehrere Werkzeuge können schon während eines Produktionslaufs vorgerichtet werden, ohne daß der Betrieb der Werkzeugmaschine gestört würde, wenn an die Werkzeugmaschine ein Zuführtisch anschließt, auf dem diese Platz finden. Diese Ausführung läßt es zu, eine Platte geringen Ausmaßes an der Werkzeugmaschine zu verwenden.

Eine einfache und bewährte Art, das Werkzeug anzuheben oder abzusenken, d. h. es beweglich zu machen oder es festzulegen, besteht darin, Rollen vorzusehen, die auf einem ausdehnbaren Druckmittelträger, z. B. einem Preßluftschlauch, getragen werden.

Um eine eindeutige Positionierung des Werkzeugs auf der Platte zu verwirklichen, ist es von Vorteil, wenn dieses stets nur in einer Richtung bewegt werden kann, weshalb mittels eines Schalters zwischen der Aktivierung der Förderelemente für die eine Richtung und denen für die andere Richtung gewählt werden kann. Ebenfalls im Stand der Technik bekannte und Kugeln enthaltende Förderelemente lassen es zu, daß sich das Werkzeug in jeder beliebigen Richtung bewegen und somit bei Unachtsamkeit von der Platte heruntergleiten kann.

Zur Unterstützung der Bedienungsperson oder zum Erzeugen eines Eingangssignals für einen Rechner sind Sensoren vorgesehen, die die Lage des Werkzeugs gegenüber der Platte ermitteln bzw. zumindest prüfen, ob es eine definierte Lage eingenommen hat oder nicht.

Werden die sich in einer Reihe befindlichen Förderelemente in zwei oder mehrere Abschnitte geteilt, die möglicherweise unabhängig voneinander betätigt werden können, kann das Zu- und das Abführen der Werkzeuge unabhängig voneinander erfolgen. Zudem können zwischen den jeweiligen Abschnitten Förderelemente vorgesehen werden, die in eine andere Richtung fördern.

Eine nahtlose Übergabe des Werkzeugs über eine längere Strecke wird bei in der gleichen Richtung fördernden und in Abschnitten geteilten Förderelementen dadurch erreicht, daß sich diese überlappen.

Zur Festlegung des Werkzeugs auf der Platte sind Nuten vorgesehen, in die Klemmen oder dergleichen Befestigungselemente einfügbar sind.

In der Zeichnung sind zwei nachfolgend näher beschriebene Ausführungsbeispiele der Erfindung dargestellt. Es zeigt:

Fig. 1 eine Werkzeugmaschine mit einem erfindungsgemäßen Einrichtsystem zum schnellen Wechseln von Werkzeugen in Vorderansicht,

Fig. 2 ein Ausführungsbeispiel des erfindungsgemäßen Einrichtsystems in perspektivischer Darstellung,

Fig. 3 ein anderes Ausführungsbeispiel des erfindungsgemäßen Einrichtsystems in Draufsicht,

Fig. 4 das Einrichtsystem gemäß Fig. 3 in Seitenansicht und

Fig. 5 einen Ausschnitt des Einrichtsystems mit einem Förderelement.

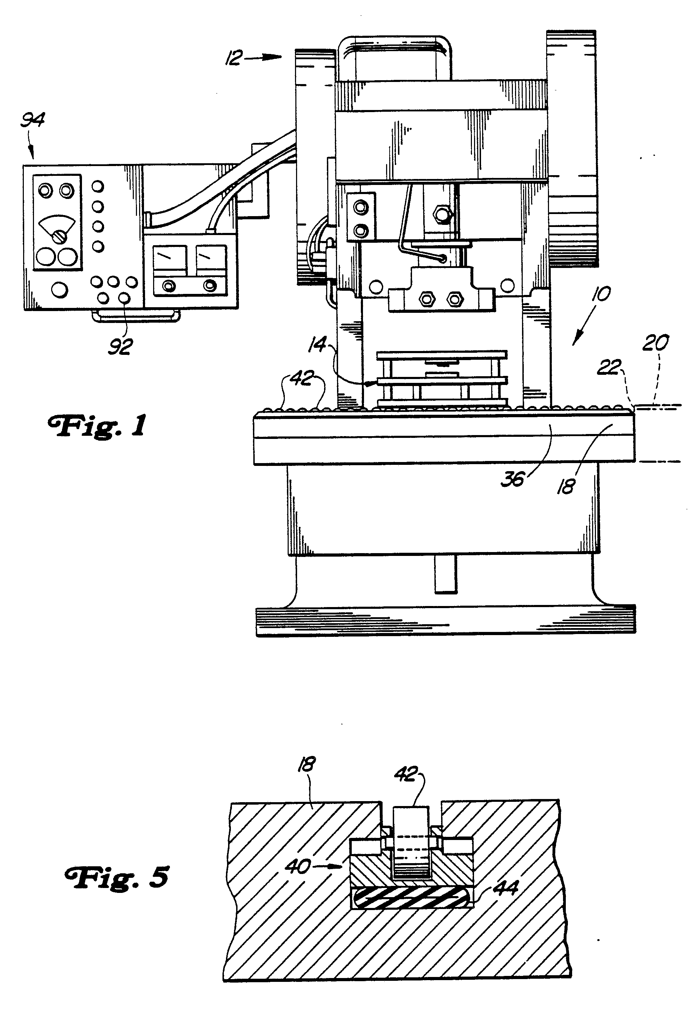

Ein in Figur 1 gezeigtes erfindungsgemäßes Einrichtsystem 10 ist für die Anwendung bei einer industriellen Werkzeugmaschine 12, z. B. einer Presse, bestimmt und wird dazu benutzt, ein Werkzeug 14, z. B. eine Matrize, auf einer Platte 18 zu bewegen und es auf dieser zu plazieren, wobei ein Minimum an Betriebszeit der Werkzeugmaschine 12 aufgewendet werden soll, um ein Werkzeug 14 gegen ein anderes Werkzeug 14 auszutauschen. Es ist zu bemerken, daß eine Bedienungsperson mittels des erfindungsgemäßen Einrichtsystems 10 ohne externe Hilfe einen Werkzeugwechsel durchführen kann.

Wie insbesondere aus den Figuren 1 bis 3 hervorgeht, enthält das Einrichtsystem 10 einen Zuführtisch 20, der an die Platte 18 angrenzt. Der Zuführtisch 20 kann dazu benutzt werden, ein oder mehrere Werkzeuge 14 vorzurichten, und zwar in der Reihenfolge, in der sie später der Werkzeugmaschine 12 gemäß einem Fertigungsplan zugeführt werden sollen. Der Zuführtisch 20 enthält Mittel, mit denen ein Werkzeug 14 von einer Stelle zu der anderen auf dem Zuführtisch 20 - vorzugsweise zu einer an der Platte 18 anliegenden Kante 22 - bewegt werden kann.

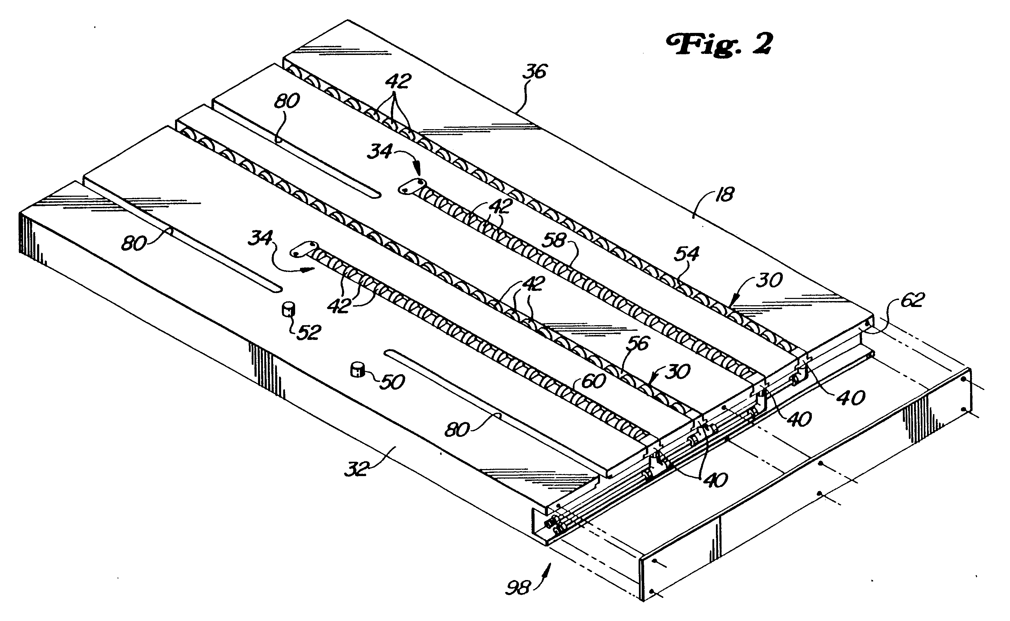

Die Figuren 2 bis 4 zeigen in der Platte 18 vorgesehene Fördereinheiten 30, 34, die zum exakten Positionieren des Werkzeuges 14 auf der Platte 18 sowohl parallel als auch rechtwinklig zu deren Längsseite 32 verwendet werden. Wie dies dargestellt ist, sorgen Förderelemente 40, auf denen eine Vielzahl von Rollen 42 angeordnet ist, für die Möglichkeit, ein Werkzeug 14 sowohl parallel als auch rechtwinklig mittels der Fördereinheiten 30, 34 auszurichten. Die Rollen 42 sind unterhalb der Oberfläche der Platte 18 vorgesehen und können mittels eines ausdehnbaren Druckmittelbehälters 44 in der Form eines aufblasbaren Luftschlauches wahlweise angehoben werden, damit sie an der Unterseite eines Werkzeugs 14 zur Anlage gelangen (Fig. 5). Diese bevorzugt verwendete Form von Förderelementen 40 ist ausführlich in der US-A-4,498,384 beschrieben und im Handel von der Firma "Wardcraft Die Products Division of Mc Laughlin, Ward & Company of Jackson, Michigan" erhältlich.

Außerdem ist in die Platte 18 ein Paar Sensoren 50, 52 in der Art von Taststiften eingebaut, die so geschaffen sind, daß sie in nicht gezeigte V-förmige Nuten von ebenfalls nicht gezeigten Adaptern an der Unterseite der Werkzeuge 14 eintreten, um die genaue Lage des Werkzeugs 14 auf der Werkzeugmaschine 12 oder irgendeiner anderen Maschine festzustellen.

Die Figuren 2 bis 4 zeigen eine derartige typische Platte 18 des erfindungsgemäßen Einrichtsystems 10 mit mindestens vier Förderelementen 40 bzw. Druckmittelbehältern 44, die sich parallel zu der Längsseite 32 der Platte 18 erstrekken. Diese Förderelemente 40 sind derart angeordnet, daß sie einer Bedienungsseite 36 näher gelegen sind als der Seite, an der sich die Sensoren 50, 52 bzw. die Längsseite 32 befinden.

In dem bevorzugten Ausführungsbeispiel gemäß Figur 2 sind die vier allgemein gesehenen Förderelemente 40 zueinander und zu der Längsseite 32 der Platte 18 parallel angeordnet. Im speziellen sind zwei Förderelemente 54, 56 in bezug auf zwei weitere Förderelemente 58, 60 länger ausgebildet. Jedoch grenzen alle Förderelemente 40 an ein Ende 62 der Platte 18 an, das selbst wiederum an dem Zuführtisch 20 anliegt. Die Rollen 42 der Förderelemente 54, 56 sind so angeordnet, daß sie eine Bewegung des Werkzeugs 14 parallel, und die der Förderelemente 58, 60 sind so angeordnet, daß sie eine Bewegung rechtwinklig zu sich erlauben und vereinfachen.

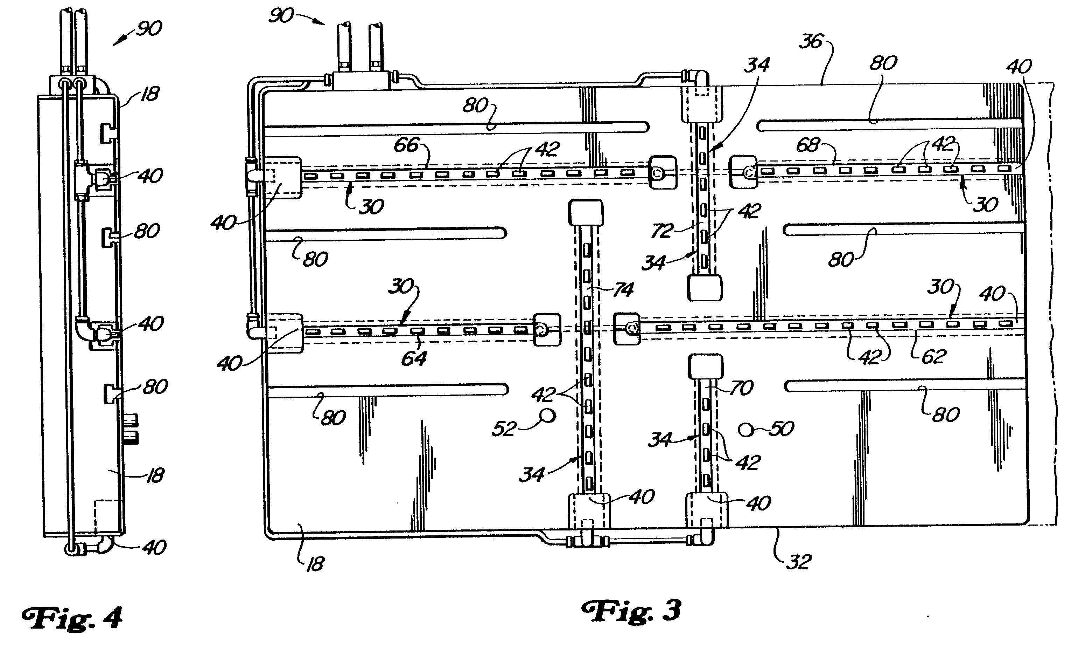

In der anderen Ausführungsform, wie sie in den Figuren 3 und 4 gezeigt ist, sind vier Förderelemente 62, 64, 66, 68 vorgesehen, wobei jeweils die Förderelemente 62 und 68 und die Förderelemente 64 und 66 einander benachbart und parallel angeordnet sind.

Drei Förderelemente 70, 72, 74 sind ungefähr in dem Mittenbereich der Platte 18 angeordnet und senkrecht zu den vier Förderelementen 62, 64, 66, 68 ausgerichtet. Das Förderelement 74 unterbricht das erste Paar zueinander parallel verlaufender Förderelemente 62, 64 und erstreckt sich fast bis zu dem zweiten Paar zueinander parallel verlaufender Förderelemente 66, 68. Das zweite Förderelement 72 unterbricht das zweite Paar zueinander parallel verlaufender Förderelemente 66, 68 und erstreckt sich fast bis an den ersten Satz zueinander parallel verlaufender Förderelemente 62, 64. Ein drittes senkrecht verlaufendes Förderelement 70 erstreckt sich auf der gleichen Linie wie das zweite Förderelement 72, aber es unterbricht nicht das erste Paar zueinander parallel verlaufender Förderelemente 62, 64. Die Sensoren 50, 52 sind zwischen der Längsseite 32 der Platte 18 und dem zweiten Paar zueinander parallel verlaufender Förderelemente 62, 64 vorgesehen, wobei sich der Sensor 50 nahe dem dritten senkrecht verlaufenden För derelement 70 befindet, während der Sensor 52 an dem ersten senkrecht verlaufenden Förderelement 74 gelegen ist. Das erste Förderelement 74 überlappt mit seinen Endbereichen jeweils das zweite und das dritte Förderelement 72, 70.

Damit das Werkzeug 14 auf der Platte 18 sicher festgelegt werden kann, sind mehrere Nuten 80 in die Platte 18 eingearbeitet, in die nicht gezeigte Befestigungselemente zum Sichern des Werkzeugs 14 auf der Platte 18 eingefügt werden können. Jedes Förderelement 40, 54, 56, 58, 60, 62, 64, 66, 68, 70, 72, 74 ist zum Betrieb mit einem Luftversorgungssystem 90 verbunden, zu dem ein Schalter 92 an einer Bedienungstafel 94 der Werkzeugmaschine 12 gehört. Der Schalter 92 hat mindestens drei Stellungen, und zwar zum Betätigen der Förderelemente 54, 56, 62, 64, 66, 68 für die parallele Förderrichtung, zum Ausschalten, d. h. Absenken, aller Förderelemente 40, 54, 56, 58, 60, 62, 64, 66, 68, 70, 72, 74 und zum Betätigen der Förderelemente 58, 60, 70, 72, 74 für die senkrechte Förderrichtung. Das Luftversorgungssystem 90 ist vorzugsweise in die Platte 18 integriert, wie es in Figur 2 gezeigt ist, oder es ist an die Außenflächen der Platte 18 angefügt, wie es in den Figuren 3 und 4 zu sehen ist.

Während des Betriebs werden üblicherweise mehrere Werkzeuge 14 auf dem Zuführtisch 20 vorgerichtet. Die Bedienungsperson wählt dann eines davon für die Herstellung des nächsten Werkstücks aus und bewegt es auf dem Zuführtisch 20 zu der Kante 22 nahe der Platte 18. Daraufhin löst die Bedienungsperson das bisher in der Werkzeugmaschine 12 benutzte Werkzeug 14 von der Platte 18 und betätigt die senkrecht angeordneten Förderelemente 58, 60, 70, 72, 74, d. h. sie fährt sie bis über die Oberfläche der Platte 18, so daß über deren Rollen 42 das Werkzeug 14 außer Eingriff mit den Sensoren 50, 52 gebracht und wegbewegt werden kann. Anschließend werden die Druckmittelbehälter 44 der Förder elemente 58, 60, 70, 72, 74 wieder drucklos gemacht und die der Förderelemente 54, 56 oder 62, 64, 66, 68 unter Druck gesetzt, so daß die Rollen 42 für die Parallelbewegung benutzt werden können. Die Bedienungsperson bewegt dann auf den Rollen 42 das bisherige Werkzeug 14 auf den Zuführtisch 20 und schiebt das neue Werkzeug 14 auf die Platte 18, d. h. unter Zuhilfenahme der Förderelemente 54, 56 bzw. 62, 64, 66, 68.

Sobald das neue Werkzeug 14 nach den Sensoren 50, 52 im wesentlichen ausgerichtet ist, werden die Druckmittelbehälter 44 der Förderelemente 54, 56 bzw. 62, 64, 66, 68 drucklos gemacht und die der Förderelemente 58, 60, 70, 72, 74 betätigt, so daß sich die Rollen 42 für die Bewegung senkrecht zu der Längsseite 32 anheben. Die Bedienungsperson kann dann das Werkzeug 14 auf der Platte 18 präzise ausrichten, indem sie es zu den Sensoren 50, 52 bewegt, bis diese in die Nuten einrasten. Ab dann macht die Bedienungsperson die Druckmittelbehälter 44 der Förderelemente 58, 60, 70, 72, 74 mittels einer Betätigung des Schalters 92 drucklos, so daß sich die darauf befindlichen Rollen 42 absenken, und sichert das Werkzeug 14 mittels nicht gezeigter Befestigungsmittel auf der Platte 18. Nachdem diese Vorgänge abgeschlossen sind, kann sich die Bedienungsperson der Arbeit mit der Werkzeugmaschine 12 zuwenden und führt den vorgegebenen Produktionslauf für die Werkstücke durch, die mit diesem aufgesetzten Werkzeug 14 hergestellt werden können.

Es ist somit ersichtlich, daß mit dem erfindungsgemäßen Einrichtsystem 10 und dem Verfahren, wie dieses bedient wird, die Werkzeugmaschine 12 bzw. jede beliebige Arbeitsmaschine in ihrer ganzen Vielseitigkeit eingesetzt werden kann, während gleichzeitig die Umrüstzeit und der für die Umrüstung erforderliche Aufwand verringert werden. Gleichzeitig wird für einen flexiblen Einsatz der Werkzeugmaschine 12 gesorgt, so daß eine Fertigung nach Anforderung anstatt im voraus vollzogen werden kann.

Wenn dies bei den bevorzugten Ausführungsbeispielen auch nicht dargestellt ist, so ist es doch erkennbar, daß das erfindungsgemäße Einrichtsystem 10 bei jeder anderen Werkzeugmaschine, z. B. einer Bohrmaschine, einer Fräse, einer Prägemaschine, einer Stanze oder dergleichen, angewendet werden kann und daß sich die Förderelemente 40 in jeder beliebigen bzw. geforderten Richtung erstrecken können. Es ist auch denkbar, die Förderelemente 40 computergesteuert bedienen zu lassen und mehr als zwei Förderrichtungen vorzusehen.

## Ansprüche

1. Einrichtsystem (10), insbesondere für eine Werkzeugmaschine (12), mit einer Platte (18), in/auf der mindestens zwei Fördereinheiten (30, 34) mit versenkbaren Förderelementen (40, 54, 56, 58, 60, 62, 64, 66, 68, 70, 72, 74) angeordnet sind, dadurch gekennzeichnet, daß die Fördereinheiten (30, 34) zur Förderung in unterschiedliche Förderrichtungen ausgerichtet oder ausgebildet sind und die Förderelemente (54, 56, 62, 64, 66, 68 bzw. 58, 60, 70, 72, 74) der Fördereinheiten (30, 34) verschiedener Förderrichtungen unabhängig voneinander versenkbar sind.

2. Einrichtsystem nach Anspruch 1, dadurch gekennzeichnet, daß je Förderrichtung mindestens zwei Fördereinheiten (30, 34) vorgesehen sind.

3. Einrichtsystem nach Anspruch 1 oder 2, dadurch gekennzeichnet, daß die Fördereinheiten (30, 34) der verschiedenen Förderrichtungen unter einem Winkel von 90° zueinander verlaufen.

4. Einrichtsystem nach einem oder mehreren der vorherigen Ansprüche, dadurch gekennzeichnet, daß ein Zuführtisch (20) vorgesehen ist, der an die Platte (18) anschließt.

5. Einrichtsystem nach einem oder mehreren der vorherigen Ansprüche, dadurch gekennzeichnet, daß die Förderelemente (40, 54, 56, 58, 60, 62, 64, 66, 68, 70, 72, 74) drehbare Rollen (42) oder dergleichen enthalten, die mittels eines ausdehnbaren Druckmittelbehälters (44), insbesondere mittels eines Preßluftschlauches, über die Oberfläche der Platte (18) anhebbar oder unter diese versenkbar sind.

6. Einrichtsystem nach einem oder mehreren der vorherigen Ansprüche, dadurch gekennzeichnet, daß mindestens ein Schalter (92) zum Anheben und Absenken der Förderelemente (40, 54, 56, 58, 60, 62, 64, 66, 68, 70, 72, 74) vorgesehen ist, über den die Förderelemente (54, 56, 62, 64, 66, 68) für die eine Förderrichtung oder die Förderelemente (58, 60, 70, 72, 74) für die andere Förderrichtung verstellt werden.

7. Einrichtsystem nach einem oder mehreren der vorherigen Ansprüche, dadurch gekennzeichnet, daß die Platte (18) Sensoren (50, 52) zur Erfassung der Lage eines Werkzeugs (14) auf der Platte (18) enthält.

8. Einrichtsystem nach einem oder mehreren der vorherigen Ansprüche, dadurch gekennzeichnet, daß die sich in Längsrichtung der Platte (18) erstreckenden Förderelemente (54, 56, 62, 64, 66, 68) abschnittsweise ausgebildet sind.

9. Einrichtsystem nach einem oder mehreren der vorherigen Ansprüche, dadurch gekennzeichnet, daß sich quer zu der Längsrichtung mindestens drei Förderelemente (70, 72, 74) erstrecken, die sich seitlich teilweise gegenseitig überlappen.

10. Einrichtsystem nach einem oder mehreren der vorherigen Ansprüche, dadurch gekennzeichnet, daß die Platte (18) Nuten (80) zur Aufnahme von Befestigungselementen aufweist.

*12* →

*94*

*92*

*Fig. 1*

*14*

*42*

*10*

*20*

*22*

*36*

*18*

*Fig. 5*

*18*

*42*

*40* →

*44*

*Fig. 2*

EP 0 304 928 A1

*Fig. 4*

*Fig. 3*

EP 0 304 928 A1

| Kategorie | EINSCHLÄGIGE DOKUMENTE<br>Kennzeichnung des Dokuments mit Angabe, soweit erforderlich, der maßgeblichen Teile | Betrifft Anspruch | EP 88113943.0<br>KLASSIFIKATION DER ANMELDUNG (Int. Cl.4) |
|---|---|---|---|
| A | WO - A1 - 87/04 412 (R. BOSCH)<br>* Zusammenfassung; Fig. *<br>-- | 1,2,3,8 | B 30 B 15/00 |
| A | CH - A5 - 650 473 (E. WIRZ AG)<br>* Fig. 1,2 *<br>-- | 1,3 | |
| A | FR - A1 - 2 477 114 (GOAVEC SA)<br>* Fig. 1,2,3 *<br>-- | 1,2,3,8 | |
| A | DE - B - 1 577 157 (AIDA IRON)<br>* Fig. 1 *<br>-- | 4 | |
| P,A | US - A - 4 691 554 (MURPHY)<br>* Fig. 2 *<br>---- | 5 | |

RECHERCHIERTE
SACHGEBIETE (Int. Cl.4)

B 30 B 15/00

B 65 G 47/00

B 23 D 33/00

B 23 Q  1/00

B 23 Q  3/00

B 21 D 43/00

B 21 J 11/00

B 21 J 13/00

Der vorliegende Recherchenbericht wurde für alle Patentansprüche erstellt.

| Recherchenort<br>WIEN | Abschlußdatum der Recherche<br>05-12-1988 | Prüfer<br>NIMMERRICHTER |
|---|---|---|